# EUROPEAN PATENT SPECIFICATION

(11) **EP 4 269 898 B1**
(45) Date of publication and mention of the grant of the patent: **05.11.2025**
(21) Application number: 22170313.5
(22) Date of filing: 27.04.2022
(51) Int. Cl.: F24F 12/00, F24F 13/10, F24F 13/20, F24F 13/28, F24F 13/04

(54) **APPARATUS FOR CONTROLLED MECHANICAL VENTILATION WITH HEAT RECOVERY**
GERÄT ZUR KONTROLLIERTEN MECHANISCHEN BELÜFTUNG MIT WÄRMERÜCKGEWINNUNG
APPAREIL DE VENTILATION MÉCANIQUE CONTRÔLÉE AVEC RÉCUPÉRATION DE CHALEUR

(43) Date of publication of application: 01.11.2023
(73) Proprietor: Rdz S.p.a., 33077 Sacile (PN) (IT)
(72) Inventor: CALEFFI, Marco, 28010 Fontaneto d'Agogna (NO) (IT)
(74) Representative: Luppi Intellectual Property S.r.l.

(56) References cited:
- EP-A2- 2 228 607
- WO-A1-2022/018021
- GB-A- 2 430 468
- KR-B1- 101 581 198
- KR-B1- 101 841 953

## Description

### Background of the invention

The present invention relates to an apparatus for controlled mechanical ventilation with heat recovery, intended to be used in various closed environments, for example apartments, offices, detached houses, etc.

### Prior art

In the last few years, buildings have been increasingly transformed into veritable "air safes". This has enabled the inside of buildings to be insulated in an excellent manner from the external environment but, at the same time, an increasingly frequent need has arisen to perform an air change. The "traditional" method of changing air, i.e. by opening the windows, would however lead to a significant quantity of thermal energy being lost in relation to the energy requirement of the residential unit, thus nullifying all the efforts to make buildings thermally insulated. This drawback, however, can be overcome thanks to the use of dual-flow controlled mechanical ventilation apparatuses with heat recovery.

Dual-flow controlled mechanical ventilation apparatuses with heat recovery are known like, for example, the system disclosed in the European patent EP2706305B1.

The European patent EP2706305B1, in particular, describes a heat recovery unit for controlled mechanical ventilation systems comprising a body, provided with openings for extracting air from the environment and openings for introducing air into the environment, which houses a heat exchanger and removable filters for cleaning the air, which are placed close to the air extraction and introduction openings. In this manner, it is possible to define, thanks to fans that can be placed inside or outside the unit, an extraction flow for extracting air from the environment and an introduction flow for introducing air to the environment, which, by passing through a heat exchanger, are able to exchange thermal energy without direct contact. The openings for extracting air from the environment and the openings for introducing air into the environment are lastly connected to respective ventilation conduits, so as to connect effectively the apparatus both with the outside and with the environment to be ventilated. For this purpose, the aforesaid device has filters that are removably insertable from the outside thanks to appropriate seats respectively placed close to the air extraction and introduction openings, so as to permit different configurations for connection to the ventilation conduits and thus facilitate installation of the apparatus. Nevertheless, the number of possible configurations remains rather limited.

A different solution aimed at increasing the possible configurations for connecting a device for controlled mechanical ventilation to the ventilation conduits is described in the European patent application EP2228607A1. In this case, the apparatus has different inlet and outlet openings for the air that can be closed by removable caps so as to adapt the device to the geometry of the ventilation conduits.

In particular, nowadays, the commercially available dual-flow controlled mechanical ventilation assemblies with heat recovery usually use the latter solution or they provide inlet and outlet openings that can be assembled in different configurations, whereas the possibility of being able to removably insert the filters from the outside is used only to facilitate the replacement thereof.

In addition, currently, the dual-flow controlled mechanical ventilation assemblies with heat recovery (except for dual-use assemblies), must be provided with a thermal bypass device, with a multiple speed drive device or speed variator and with a filter-change warning system.

In particular, the thermal bypass device enables the heat exchanger to be cut out of the path of the introduction air flow so as to take advantage of the temperature conditions of the outside air when they are energetically favourable.

Differently, the speed variator enables the speed of the fans to be controlled so as to optimize the activity thereof according to some environmental parameters, increasing the energy efficiency of the apparatuses. An apparatus for controlled mechanical ventilation, comprising speed variators of the suction devices, is described in the European patent application EP2811234A2.

Being energy efficient, in fact, is not only a necessity but is also a duty. However, commercially available apparatuses, although they ensure a high number of usage configurations, and thus great installation flexibility, do not ensure a pressure drop that is independent of the adopted configuration, thus sacrificing the energy efficiency of some configurations in favour of others.

It is thus important to improve current dual-flow controlled mechanical ventilation apparatuses with heat recovery so as to ensure great installation flexibility without, however, affecting the energy efficiency of the apparatus.

### Objects of the invention

One object of the present invention is to propose a dual-flow controlled mechanical ventilation apparatus with heat recovery that ensures high energy efficiency regardless of the configuration adopted, that is, regardless of the direction of the fans and/or of the choice of the extraction and/or introduction openings used.

A further object of the present invention is to provide a dual-flow controlled mechanical ventilation apparatus with heat recovery that has great simplicity and flexibility of installation.

### Brief description of the invention

Such objects are achieved by a dual-flow controlled mechanical ventilation apparatus with heat recovery in accordance with claim 1.

KR101581198B1 relates to the preamble of claim 1.

### Brief description of the drawings

The invention can be better understood with reference to the attached drawings, which illustrate an exemplary and non-limiting embodiment thereof, in which:
Fig.1 is a perspective view of a dual-flow controlled mechanical ventilation apparatus with heat recovery according to the invention;
Fig.2 is another perspective view of the apparatus of Fig.1 that is partially exploded and with a part removed;
Fig.3 is a further perspective view of the apparatus of Fig.1 that is partially exploded;
Fig.4 is a perspective view of a detail of the apparatus of Fig.1;
Fig.5 shows the apparatus of Fig.1 in the view of Fig.3 with a part removed in a first operating position;
Fig.6 shows the apparatus of Fig.1 in the view of Fig.3 with a part removed in another operating position;
Fig.7 is a perspective exploded view of another detail of the apparatus of Fig.1;
Fig.8 is a partial perspective view of the apparatus of Fig.1 that is partially exploded;
Fig.9 is a perspective bottom view of the detail of Fig.7;
Fig. 10 is a partial perspective bottom view of the apparatus of Fig.1 that is partially exploded.

### Detailed description of the invention

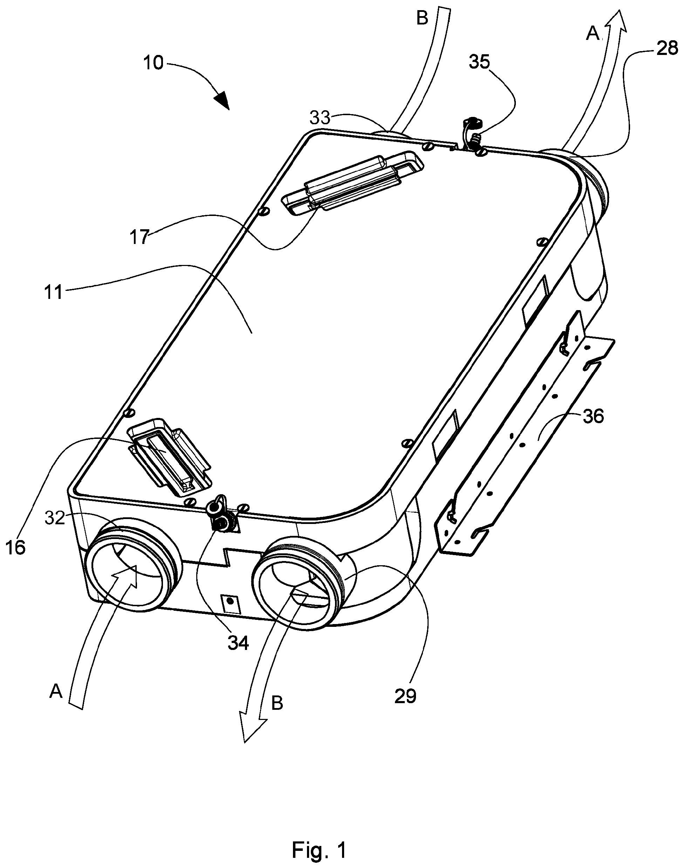

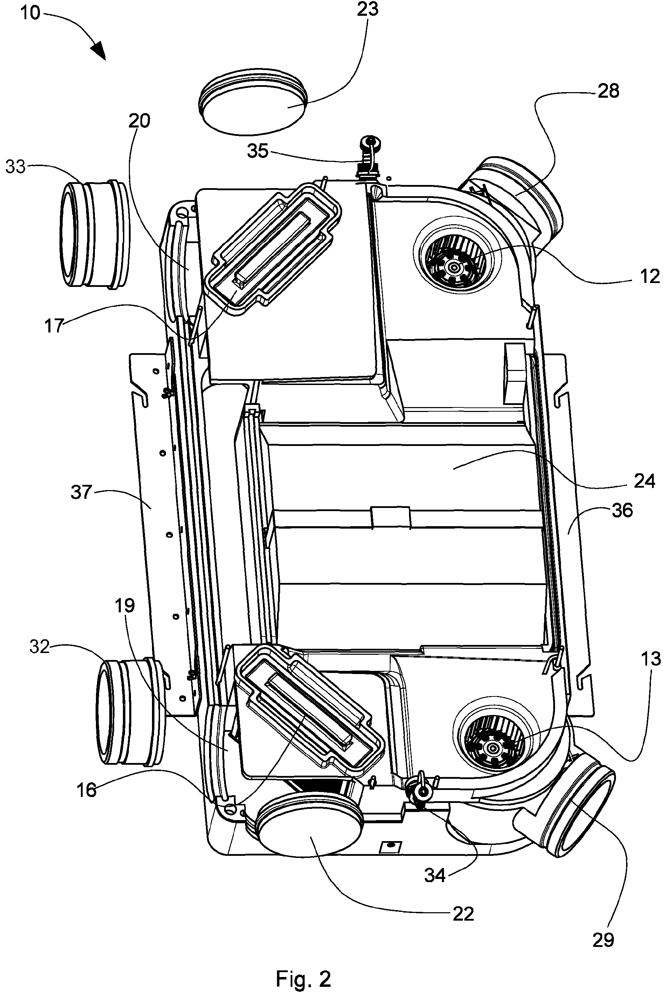

With reference to Figs.1,2, the illustrated dual-flow controlled mechanical ventilation apparatus with heat recovery for environments, indicated generically by 10, has a body 11 which houses an extraction fan 12 for extracting air from the environment and an introduction fan 13 for introducing air to the environment, respectively generating an extraction air flow A and an introduction air flow B. The fans 12,13 are, in the example, centrifugal, but can be of another type.

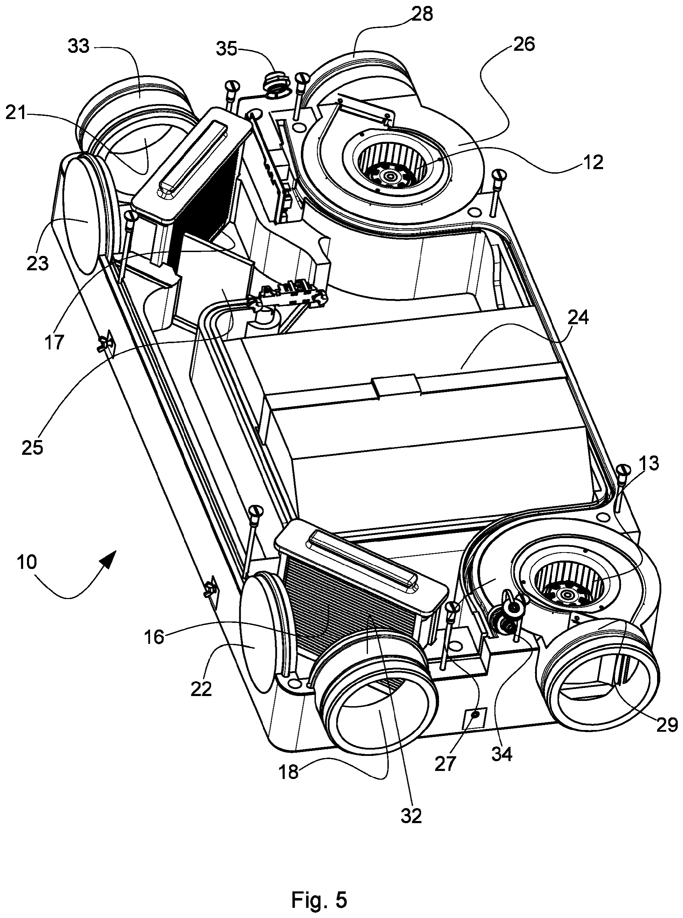

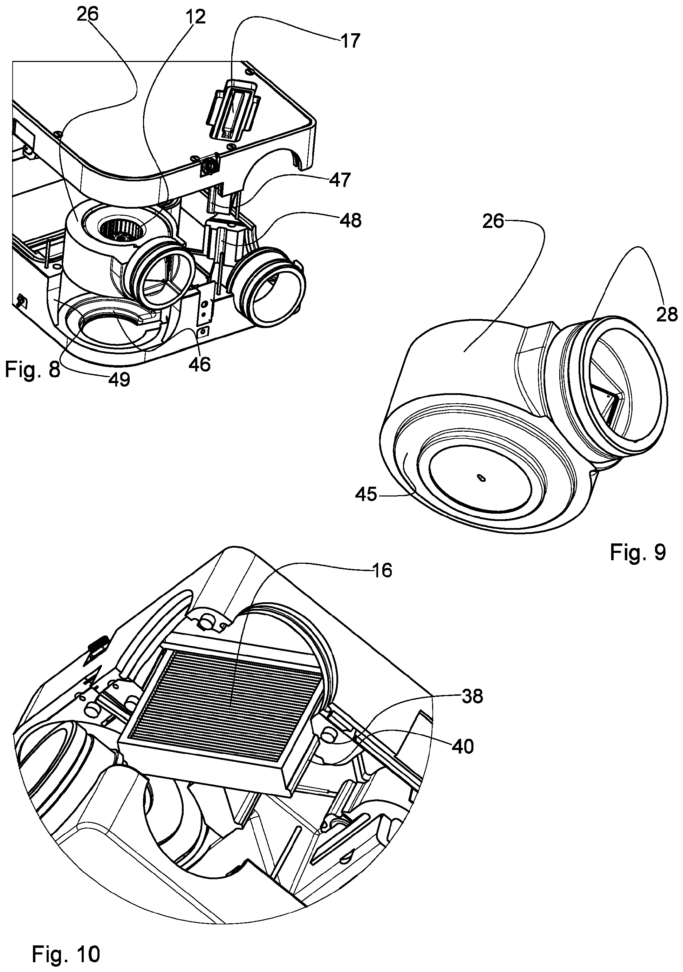

As can be seen in Figs.5-8, the extraction and introduction fans 12,13 are placed in respective substantially cylindrical housings 26,27, inside corresponding seats 42 of the same housings. In turn, the orientable housings 26,27 are received in respective open outer niches 49 of the body 11, and are rotationally orientable from the outside (that is, they are rotationally orientable without the need to have to access the inside of the apparatus 10). Each niche 49 has a wall that extends as an arc of a circle to receive the respective cylindrical housing 26 or 27. The housings 26,27 are provided with respective extraction and introduction ports 28,29 for connection to the respective ventilation conduits (which are not shown), so that the direction of the extraction air flow A exiting the ventilator is fixed, i.e. with a pressure drop that is independent of the orientation and optimal, i.e. with minimum possible pressure drop with respect to the extraction port 28 and, in the same manner, so that also the direction of the introduction air flow B is fixed and optimum with respect to the introduction port 29. The housings 26,27 are rotationally orientable progressively from 0° to 90°, that is, rotationally orientable progressively between two positions that are perpendicular to one another. The seats 42 of the housings 26,27 are cochlea-shaped in order to receive the centrifugal fans 12,13 of the same shape so as to exclude the possibility of incorrect mounting of these components. As shown in Figs.8,9, the rotational orientability of each housing 26,27 is achieved thanks to the presence of a respective annular seat 46 conformed to couple with a lower shape 45 of the respective housing 26 or 27 so as to allow a movement of rotational type by the latter inside the annular seat 46 itself.

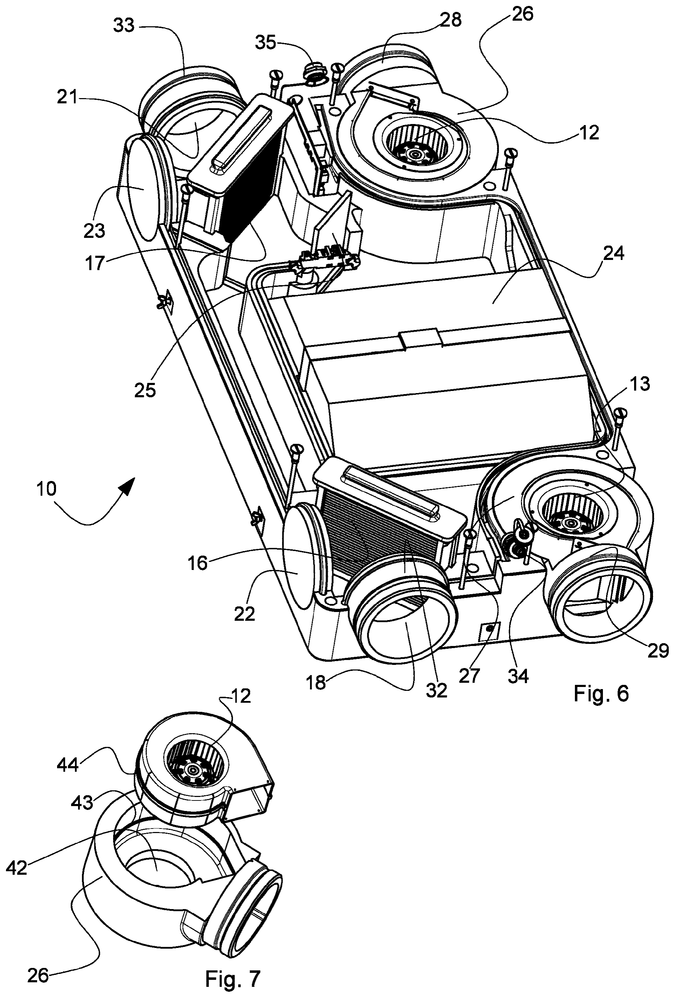

As shown in Fig.7, the coupling of each fan 12,13 with its own seat 42 and thus with its own housing 26,27 can be made by means of an external annular rib 44 of the casing of the fan 12 or 13 which fits by interlocking into a corresponding annular recess 43 of the seat 42.

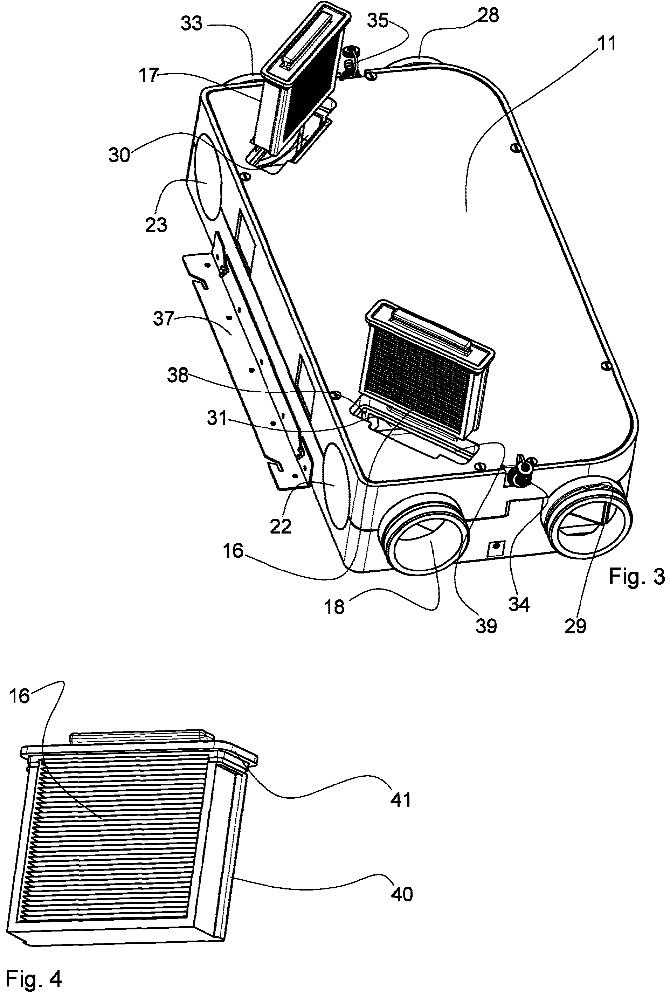

Inside the body 11, there are also arranged an exchanger 24, which can be, for example, of enthalpic type or can be made of plastic material, with a corresponding thermal bypass device 25, and extraction and introduction filters, 16 and 17, arranged in an extractable manner, as can be seen in in Fig.3, inside seats 30,31 thereof, close to respective extraction openings 18,19, oriented at 90° with respect to one another and connected to the extraction fan 12, and close to respective introduction openings 20,21, oriented at 90° with respect to one another and connected to the introduction fan 13. In addition, as can be seen in Figs.3,4,10 the seats 30,31 each have lateral rectilinear guides 38,48 in which respective lateral ribs 40,47 of the filter 16 or 17 slide and an upper annular edge 39 on which an upper annular border 41 on the filter 16 or 17 abuts, so as to hinder the leak of air flows A,B from the apparatus 10 and, therefore, favour the passage of the air flows A,B through the filters 16,17 themselves.

The extraction openings 18,19 and introduction openings 20,21 are, according to choice, closed by removable caps 22,23 or provided with removable ports 32,33 for connection to the respective ventilation conduits (not shown). As can be seen in Figs.1,2,3,5,6,8,10, the extraction filter 16 is arranged at 45° with respect to the extraction openings 18,19 and the introduction filter 17 is arranged at 45° with respect to the introduction openings 20,21.

Both fans 12,13 are controlled by respective speed variators (not shown) and there is a filter-change warning system (not shown). In detail, these arrangements are essential to ensure high energy efficiency: the speed variators in fact enable the speed of the fans 12,13 to be changed according to certain environmental parameters such as relative humidity, CO₂ concentration (which provides an indication of the presence or absence of people), brightness, etc. so as to avoid unnecessary waste of energy; at the same time, it is however essential to keep the conditions of the filters 16,17 under control because it is necessary for the exchanger 24 to be kept clean so as to preserve the operating effectiveness thereof.

Outlets 34,35 are provided on the body 11 to convey the condensate formed inside the body 11 to the outside.

Lastly, the apparatus 10 is associated with L-shaped profiles 36,37 for its fixing to a wall or ceiling of a room.

With reference to Fig.5, the "standard" operation of the apparatus 10 will now be described.

During "standard" operation, the bypass device 25 is arranged so as to enable the passage of the introduction air flow B through the exchanger 24 and thus so as to permit the heat exchange between the extraction air flow A and the introduction air flow B. In particular, the exchanger 24 is made of synthetic materials so that the two air flows A,B are able to exchange both sensible heat (temperature) and latent heat (humidity), but avoiding however the formation of mould and bacteria, and the transfer of odours and/or pollutants. The heat exchange between the extraction air flow A and the introduction air flow B thus allows an air exchange with a reduced dispersion of thermal energy.

Otherwise, as can be seen in Fig.6, whenever it is energetically favourable to take advantage of the temperature conditions of the outside air (for example, during a summer evening), the bypass device 25 is arranged so as to exclude the exchanger 24 from the path of the introduction air flow B. In this manner, the heat exchange is prevented between the extraction air flow A and the introduction air flow B, whilst allowing an exchange of air.

The apparatus 10 has great installation flexibility thanks to the positioning of the extraction fan 12 and introduction fan 13 inside the respective orientable housings 26,27 and to the possibility of being able to choose, reversibly, which extraction openings 18,19 and introduction openings 20,21 are closed by the caps 22,23 and which, on the other hand, are provided with ports 32,33. Installation is moreover particularly simple thanks to the presence of the fixing profiles 36,37.

Furthermore, the positioning of the fans 12,13 inside the respective orientable housings is such as to ensure a pressure drop that is not only the minimum possible, but also independent of the orientation.

The low pressure drop, added to the particular arrangement of the filters 16,17, namely at 45° with respect to the relative openings 18,19,20,21, enables the apparatus 10 to ensure the same energy efficiency regardless of the configuration adopted.

Lastly, the apparatus 10 is easy and quick to maintain thanks to the possibility of being able to extract the filters 16,17 from the seats 30,31 thereof directly from the outside.

Variances in the configuration of the body of the apparatus and in the configuration and number of the components thereof are possible as long as they fall within the scope of the claims.

## Claims

1. Dual-flow controlled mechanical ventilation apparatus (10) with heat recovery for environments, comprising a body (11) which houses an extraction fan (12) for extracting air from the environment and an introduction fan (13) for introducing air to the environment, respectively generating an extraction air flow (A) and an introduction air flow (B), the extraction and introduction air flows (A,B) being filtered by extraction and introduction filters (16,17) placed close to the respective extraction openings (18,19) and introduction openings (20,21), wherein the extraction air flow (A) passes through an exchanger (24) so as to exchange thermal energy, without direct contact, with the introduction air flow (B), wherein the passage of the introduction air flow (B) through the exchanger (24) is controlled by a thermal bypass device (25) which, when required, excludes the heat exchange, **characterized in that** the extraction and introduction fans (12,13) are placed inside respective rotationally orientable housings (26,27), provided with respective extraction and introduction ports (28,29), wherein each housing (26;27) is received in an open external niche (49) of the body (11) of the apparatus, so as to be able to modify the orientation of each housing (26;27) from the outside, wherein each housing (26;27) is rotationally orientable progressively from 0° to 90°, namely it is rotationally orientable progressively between two orientations that are perpendicular to one another, wherein each housing (26;27) is rotationally orientable thanks to the presence of an annular seat (46) of the respective niche (49), conformed to couple with a lower shape (45) of the housing (26;27) so as to allow a rotational movement by the housing (26;27) inside the annular seat (46) itself, wherein the fans (12,13) are centrifugal, and wherein the seat (42) is cochlea-shaped.

2. Apparatus according to claim 1, wherein two extraction openings (18,19) are provided which are closable and connected to the extraction fan (12), oriented at 90° with respect to one another, one of which, in use, is provided with a removable extraction port (32) and the other is kept closed, and two introduction openings (20,21) which are closable and connected to the introduction fan (13), oriented at 90° with respect to one another, one of which, in use, is provided with a removable introduction port (33) and the other is kept closed, wherein the extraction filter (16) is arranged at 45° with respect to the extraction openings (18,19) and the introduction filter (17) is arranged at 45° with respect to the introduction openings (20,21) so as to permit the same pressure drop regardless of the pair of extraction and introduction openings (18-21) used.

3. Apparatus according to any one of the preceding claims, wherein a seat (42) is obtained inside each housing (26;27), in which the respective fan (12;13) is positioned.

4. Apparatus according to claim 3, wherein each seat (42) and each fan (12;13) have, respectively, recesses (43) and ribs (44) so as to fix by interlocking the fans (12,13) inside the corresponding seat (42).

5. Apparatus according to any one of the preceding claims, wherein the exchanger (24) is of enthalpy type or made of plastic material.

6. Apparatus according to any one of the preceding claims, wherein the body (11) has seats (30,31) in which the filters (16,17) are removably inserted from the outside.

7. Apparatus according to claim 6, wherein each seat (30;31) has lateral rectilinear guides (38,48) in which respective lateral ribs (40,47) of the filter (16;17) slide and an upper annular edge (39) against which an upper annular border (41) on the filter (16;17) abuts, so as to hinder the leak of air flows (A,B) from the apparatus and, consequently, favour the passage of the air flows (A,B) through the filters (16,17).

8. Apparatus according to claim 2, with which removable caps (22,23) are associated to close the openings (18,19,20,21) when the ports (32,33) are removed.

9. Apparatus according to any one of the preceding claims, wherein outlets (34,35) are provided to convey the condensate formed inside the body (11) to the outside.

10. Apparatus according to any one of the preceding claims, associated with one or more profiles (36, 37) for fixing the apparatus to a wall or to a ceiling of premises.

## Patentansprüche

1. Mechanische Lüftungsvorrichtung (10) mit zweifacher Regelung und Wärmerückgewinnung für Innenräume, umfassend ein Gehäuse (11), in dem ein Absaugventilator (12) zum Absaugen von Luft aus der Umgebung und ein Zuluftventilator (13) zum Zuführen von Luft in den Innenraum untergebracht sind, die jeweils einen Absaugluftstrom (A) und einen Zuluftstrom (B) erzeugen, wobei die Absaug- und Zuluftströme (A, B) durch Absaug- und Zuluftfilter (16, 17) gefiltert werden, die in der Nähe der jeweilFigen Absaugöffnungen (18, 19) und Zuluftöffnungen (20, 21) angeordnet sind, wobei der Absaugluftstrom (A) einen Wärmetauscher (24) durchläuft, um ohne direkten Kontakt Wärmeenergie mit dem Zuluftstrom (B) auszutauschen, wobei der Durchgang des Zuluftstroms (B) durch den Wärmetauscher (24) durch eine thermische Bypass-Vorrichtung (25) gesteuert wird, die den Wärmeaustausch bei Bedarf ausschließt,
**dadurch gekennzeichnet, dass** die Absaug- und Zufuhrventilatoren (12, 13) in jeweiligen drehbar ausrichtbaren Gehäusen (26, 27) angeordnet sind, die mit jeweiligen Absaug- und Zufuhranschlüssen (28, 29) versehen sind, wobei jedes Gehäuse (26; 27) in einer offenen äußeren Nische (49) des Gehäuses (11) der Vorrichtung aufgenommen ist, um die Ausrichtung jedes Gehäuses (26; 27) von außen ändern zu können, wobei jedes Gehäuse (26; 27) schrittweise von 0° bis 90° drehbar ausrichtbar ist, d. h. es ist schrittweise zwischen zwei zueinander senkrechten Ausrichtungen drehbar ausrichtbar, wobei jedes Gehäuse (26; 27) dank des Vorhandenseins einer ringförmigen Aufnahme (46) der jeweiligen Nische (49) drehbar ausrichtbar ist, die so angepasst ist, dass sie mit einer unteren Form (45) des Gehäuses (26; 27) gekoppelt ist, um eine Drehbewegung des Gehäuses (26; 27) innerhalb der ringförmigen Aufnahme (46) selbst zu ermöglichen, wobei die Ventilatoren (12,13) zentrifugal, und wobei die Aufnahme (42) spiralförmig ist.

2. Vorrichtung nach Anspruch 1, wobei zwei verschließbare und mit dem Absaugventilator (12) verbundene, im 90°-Winkel zueinander stehende Absaugöffnungen (18, 19) vorgesehen sind, von denen eine im Betrieb mit einem abnehmbaren Absauganschluss (32) versehen ist und die andere geschlossen bleibt, sowie zwei verschließbare und mit dem Zuluftventilator (13) verbundene, im 90°-Winkel zueinander stehende Zuluftöffnungen (20, 21), von denen eine im Betrieb mit einem abnehmbaren Zuluftanschluss (33) versehen ist und die andere geschlossen bleibt, wobei der Absaugfilter (16) im 45°-Winkel zu den Absaugöffnungen (18, 19) und der Zuluftfilter (17) im 45°-Winkel zu den Zuluftöffnungen (20, 21) angeordnet sind, um unabhängig vom verwendeten Paar Absaug- und Zuluftöffnungen (18-21) den gleichen Druckabfall zu ermöglichen.

3. Vorrichtung nach einem der vorstehenden Ansprüche, wobei sich im Inneren jedes Gehäuses (26; 27) eine Aufnahme (42) befindet, in der der jeweilige Ventilator (12; 13) positioniert ist.

4. Vorrichtung nach Anspruch 3, wobei jede Aufnahme (42) und jeder Ventilator (12; 13) jeweils Aussparungen (43) und Rippen (44) aufweisen, um die Ventilatoren (12, 13) durch Verriegeln in der entsprechenden Aufnahme (42) zu fixieren.

5. Vorrichtung nach einem der vorstehenden Ansprüche, wobei der Wärmetauscher (24) vom Enthalpietyp ist oder aus Kunststoff besteht.

6. Vorrichtung nach einem der vorstehenden Ansprüche, wobei das Gehäuse (11) Aufnahmen (30, 31) aufweist, in die die Filter (16, 17) von außen herausnehmbar eingesetzt werden.

7. Vorrichtung nach Anspruch 6, wobei jede Aufnahme (30; 31) seitliche geradlinige Führungen (38, 48) aufweist, in denen jeweilige seitliche Rippen (40, 47) des Filters (16; 17) gleiten, sowie eine obere ringförmige Kante (39), an der ein oberer ringförmiger Rand (41) des Filters (16; 17) anliegt, um das Austreten von Luftströmen (A, B) aus der Vorrichtung zu verhindern und folglich den Durchgang der Luftströme (A, B) durch die Filter (16, 17) zu begünstigen.

8. Vorrichtung nach Anspruch 2, der abnehmbare Kappen (22, 23) zugeordnet sind, um die Öffnungen (18, 19, 20, 21) zu verschließen, wenn die Anschlüsse (32, 33) entfernt werden.

9. Vorrichtung nach einem der vorstehenden Ansprüche, wobei Auslässe (34, 35) vorgesehen sind, um das im Inneren des Gehäuses (11) gebildete Kondensat nach außen zu befördern.

10. Vorrichtung nach einem der vorstehenden Ansprüche, verbunden mit einem oder mehreren Profilen (36, 37) zur Befestigung der Vorrichtung an einer Wand oder einer Decke von Räumlichkeiten.

## Revendications

1. Appareil de ventilation mécanique contrôlée à double flux (10) avec récupération de chaleur pour environnements, comprenant un corps (11) qui abrite un ventilateur d'extraction (12) pour extraire l'air de l'environnement et un ventilateur d'introduction (13) pour introduire l'air dans l'environnement, générant respectivement un flux d'air d'extraction (A) et un flux d'air d'introduction (B), les flux d'air d'extraction et d'introduction (A, B) étant filtrés par des filtres d'extraction et d'introduction (16, 17) placés à proximité des ouvertures d'extraction (18, 19) et d'introduction (20, 21) respectives, dans lequel le flux d'air d'extraction (A) traverse un échangeur (24) afin d'échanger de l'énergie thermique, sans contact direct, avec le flux d'air d'introduction (B), dans lequel le passage du flux d'air d'introduction (B) à travers l'échangeur (24) est contrôlé par un dispositif de dérivation thermique (25) qui, au besoin, exclut l'échange de chaleur, **caractérisé en ce que** les ventilateurs d'extraction et d'introduction (12, 13) sont placés à l'intérieur de boîtiers respectifs orientables en rotation (26, 27), dotés d'orifices d'extraction et d'introduction respectifs (28, 29), dans lesquels chaque boîtier (26 ; 27) est reçu dans une niche externe ouverte (49) du corps (11) de l'appareil, afin de pouvoir modifier l'orientation de chaque boîtier (26 ; 27) depuis l'extérieur, dans lequel chaque boîtier (26 ; 27) est orientable en rotation progressivement de 0° à 90°, c'est-à-dire qu'il est orientable en rotation progressivement entre deux orientations qui sont perpendiculaires l'une à l'autre, dans lequel chaque boîtier (26 ; 27) est orientable en rotation grâce à la présence d'un siège annulaire (46) de la niche respective (49), conformé pour s'accoupler avec une forme inférieure (45) du boîtier (26 ; 27) de manière à permettre un mouvement de rotation du boîtier (26 ; 27) à l'intérieur du siège annulaire (46) lui-même, dans lequel les ventilateurs (12, 13) sont centrifuges et dans lequel le siège (42) a la forme d'une cochlée.

2. Appareil selon la revendication 1, dans lequel deux ouvertures d'extraction (18, 19) sont prévues, qui peuvent être fermées et reliées au ventilateur d'extraction (12), orientées à 90° l'une par rapport à l'autre, dont l'une, en cours d'utilisation, est pourvue d'un orifice d'extraction amovible (32) et l'autre est maintenue fermée, et deux ouvertures d'introduction (20, 21) qui peuvent être fermées et reliées au ventilateur d'introduction (13), orientées à 90° l'une par rapport à l'autre, dont l'une, en cours d'utilisation, est munie d'un orifice d'introduction amovible (33) et l'autre est maintenue fermée, le filtre d'extraction (16) étant disposé à 45° par rapport aux ouvertures d'extraction (18, 19) et le filtre d'introduction (17) étant disposé à 45° par rapport aux ouvertures d'introduction (20, 21) de manière à permettre la même chute de pression quelle que soit la paire d'ouvertures d'extraction et d'introduction (18-21) utilisée.

3. Appareil selon l'une quelconque des revendications précédentes, dans lequel un siège (42) est obtenu à l'intérieur de chaque logement (26 ; 27), dans lequel le ventilateur respectif (12 ; 13) est positionné.

4. Appareil selon la revendication 3, dans lequel chaque siège (42) et chaque ventilateur (12 ; 13) comportent respectivement des évidements (43) et des nervures (44) de manière à fixer par emboîtement les ventilateurs (12,13) à l'intérieur du siège correspondant (42).

5. Appareil selon l'une quelconque des revendications précédentes, dans lequel l'échangeur (24) est de type enthalpique ou en matière plastique.

6. Appareil selon l'une quelconque des revendications précédentes, dans lequel le corps (11) présente des sièges (30, 31) dans lesquels les filtres (16, 17) sont insérés de manière amovible depuis l'extérieur.

7. Appareil selon la revendication 6, dans lequel chaque siège (30 ; 31) possède des guides latéraux rectilignes (38, 48) dans lesquels les nervures latérales respectives (40, 47) du filtre (16 ; 17) et un bord annulaire supérieur (39) contre lequel un bord annulaire supérieur (41) du filtre (16 ; 17) vient en butée, de manière à empêcher la fuite des flux d'air (A, B) de l'appareil et, par conséquent, à favoriser le passage des flux d'air (A, B) à travers les filtres (16, 17).

8. Appareil selon la revendication 2, auquel sont associés des bouchons amovibles (22, 23) pour fermer les ouvertures (18, 19, 20, 21) lorsque les orifices (32, 33) sont retirés.

9. Appareil selon l'une quelconque des revendications précédentes, dans lequel des sorties (34, 35) sont prévues pour acheminer vers l'extérieur le condensat formé à l'intérieur du corps (11).

10. Appareil selon l'une quelconque des revendications précédentes, associé à un ou plusieurs profilés (36, 37) pour la fixation de l'appareil à un mur ou à un plafond de locaux.
